# EUROPÄISCHE PATENTSCHRIFT

(11) **EP 0 824 764 B1**
(45) Veröffentlichungstag und Bekanntmachung des Hinweises auf die Patenterteilung: **06.06.2001**
(21) Anmeldenummer: 96946099.7
(22) Anmeldetag: 19.12.1996
(51) Int. Cl.: H01Q 1/44

(54) **SCHEINWERFER MIT INTEGRIERTER MIKROWELLENANTENNE**
HEAD-LAMP WITH INTEGRATED MICROWAVE ANTENNA
PROJECTEUR A ANTENNE HYPERFREQUENCE INTEGREE

(30) Priorität: 29.02.1996 DE 19607653
(43) Veröffentlichungstag der Anmeldung: 25.02.1998
(73) Patentinhaber: ROBERT BOSCH GMBH, 70442 Stuttgart (DE)
(72) Erfinder: PFIZENMAIER, Heinz, D-71229 Leonberg (DE); PETRY, Hans-Peter, D-74429 Sulzbach-Laufen (DE)
(86) Internationale Anmeldenummer: DE9602454
(87) Internationale Veröffentlichungsnummer: WO9732357

(56) Entgegenhaltungen:
- EP-A- 0 281 042
- FR-A- 876 618
- US-A- 2 423 648
- US-A- 3 947 832
- US-A- 5 075 680

## Beschreibung

Die Erfindung geht aus von einem Scheinwerfer, insbesondere Kraftfahrzeugscheinwerfer, mit integrierter Mikrowellenantenne der im Oberbegriff des Anspruchs 1 definierten Gattung.

Bei einem bekannten Scheinwerfer dieser Art (US 3 683 379) wird der Glühfaden einer Scheinwerferbirne sowohl zum Abgeben der optische Strahlung im Bereich des sichtbaren Lichtes als auch in der Funktion des Abstrahlers, Strahlreflektors und Empfangsantenne für Hochfrequenzen benutzt. Die Benutzung ist im Zusammenhang mit einem Fahrzeugwarn- und -steuersystem zum Einhalten von ausreichendem Sicherheitsabstand zu vorausfahrenden Fahrzeugen vorgesehen. Ein solches System wird auch als Abstandsradar bei Fahrzeugen bezeichnet. Dieses bekannte System arbeitet bei einer Frequenz von ca. 850 MHz, was für ein heute gefordertes relativ hoch auflösendes genaueres Abstandsradar nicht ausreichend ist. Darüber hinaus ist die Arbeitsfrequenz dadurch nach oben hin begrenzt, daß die Glühfäden der Scheinwerferbirne kaum kleiner und enger als Spirale gewickelt werden können, um höhere Frequenzen zu erzielen. Daher wohnt diesem bekannten Scheinwerfer mit integrierter Mikrowellenantenne eine systembedingte obere Frequenzgrenze inne.

Weiterhin ist aus der EP 0 559 546 A1 eine Mikrowellenantenne für einen Sender und/oder Empfänger eines Fahrzeugs und eine Scheinwerferglühbirne zur Ausführung derselben bekannt. Dabei ist das Strahlerelement für die Hochfrequenz innerhalb des Glaskolbens der Glühbirne in der Nähe der dort untergebrachten Glühfäden für Fern- und Abblendlicht sowie in der Nähe des Brennpunkts des Reflektors des Scheinwerfers untergebracht. Abgesehen von dem sehr komplexen Aufbau einer derartigen Glühbirne ist die örtliche Zuordnung von sichtbarer Lichtquelle und Mikrowellenstrahlquelle durch diese Anordnung starr aneinander gebunden.

Bei diesen bekannten Scheinwerfern mit integrierter Mikrowellenantenne ist entweder eine funktionelle Kopplung des Glühfadens oder eine räumlich starre Kopplung der Glühfäden mit der Mikrowellenantenne vorhanden.

### Vorteile der Erfindung

Der erfindungsgemäße Scheinwerfer mit integrierter Mikrowellenantenne mit den kennzeichnenden Merkmalen des Anspruchs 1 hat demgegenüber den Vorteil der optimalen Bündelung des Scheinwerferlichtes als auch der Radarstrahlen, wobei durch geeignet gewählte Geometrie des Reflektors, der unabhängig voneinander möglichen Anordnung von Lichtquelle und Mikrowellenstrahlquelle auch die optimale Radarkeulenform unabhängig von der gewünschten Lichtbündelung erreicht werden kann. Diese Lösung spart Kosten und Platz und ermöglicht, bei einmal optimierter Lichtbündelung und Radarkeulenform, eine gleichzeitigen Justage von Licht- und Radarstrahlen.

Gemäß der Erfindung wird dies prinzipiell dadurch erreicht, daß das optische System mit seiner Lichtquelle und das Mikrowellensystem mit seinem Speiseelement und/oder Empfangselement funktionell und räumlich vollständig unabhängig voneinander gestaltet und getrennt angeordnet sind.

Durch die in den weiteren Ansprüchen niedergelegten Maßnahmen sind vorteilhafte Weiterbildungen und Verbesserungen des im Anspruch 1 angegebenen Scheinwerfers mit integrierter Mikrowellenantenne möglich.

In besonders zweckmäßiger Ausgestaltung der Erfindung sind paraboloidartige Reflektoren vorgesehen. In vorteilhafter Weiterbildung der Erfindung ist der Reflektor mit einer Streuscheibe und/oder einer dielektrischen Linse versehen. Entsprechend vorteilhafter Ausgestaltungen kann weiterhin der Reflektor rotationssymmetrisch oder als Offset-Reflektor gestaltet sein.

Gemäß vorteilhafter Ausgestaltung der Erfindung ist als Speiseelement ein Speisehorn, ein dielektrischer Speisestrahler, oder ein Mikrostreifenleiter-Patch bzw. -Patch- Array vorgesehen. Entsprechend einer besonders zweckmäßigen Weiterbildung der Erfindung erfolgt die Einstrahlung der Mikrowellen mittels des Speiseelements auf den Reflektor direkt oder indirekt, insbesondere über einen Sub- oder Hilfsreflektor.

Entsprechend einer weiteren besonders zweckmäßigen Ausgestaltung der Erfindung ist das Speiseelement oder ein Subreflektor so angeordnet sind, daß das direkte Licht der Lichtquelle dadurch abschirmbar ist.

Eine besonders vorteilhafte Ausgestaltung der Erfindung sieht vor, daß Lichtquelle und ein oder mehrere planar gestaltete Mikrowellen-Speiseelemente und/oder Mikrowellen-Empfangselemente auf einem gemeinsamen ebenen Trägersubstrat aufgebracht sind und daß das Trägersubstrat außerhalb eines Offset-Reflektors angeordnet ist.

In vorteilhafter Weiterbildung dieser Ausgestaltung der Erfindung kann die Einstrahlung auf zweierlei Weise erfolgen, die je nach Anwendungsfall und den gegebenen Platzverhältnissen von Vorteil ist. Zum einen ist die Anordnung des Trägersubstrats und der darauf angeordneten Elemente derart getroffen, daß die Einstrahlung von Licht und Mikrowellen direkt erfolgt. Zum anderen ist die Anordnung des Trägersubstrats und der darauf angeordneten Elemente derart getroffen, daß die Einstrahlung von Licht und Mikrowellen indirekt erfolgt, wobei ein entsprechend geformter und angeordneter Hilfsreflektor vorgesehen ist und der Offset-Reflektor als besonders geformtes Teil ausgeführt ist. In vorteilhafter Weiterbildung dieser Ausgestaltung kann der Hilfsreflektor und/oder der Offset-Reflektor ein Ausschnitt aus einem Rotationsellipsoiden oder aus einem Rotationshyperboloiden sein.

In weiterer vorteilhafter Ausgestaltung der Erfindung ist als Lichtquelle eine Halogenlampe, insbesondere eine H4-Lampe, oder eine Gasentladungslampe, insbesondere eine Hochdruck-Gasentladungslampe, vorgesehen.

Um den Anforderungen an die Genauigkeit des Radarsystems bei den jeweiligen Anwendungen zu genügen, wird entsprechend weiterer vorteilhafter Ausgestaltung der Erfindung das Mikrowellensystem im Bereich von ca. 10 - 100 GHz, vorzugsweise im Bereich von ca. 76 - 77 GHz, betrieben.

### Zeichnung

Die Erfindung ist anhand mehrerer in der Zeichnung dargestellter Ausführungsbeispiele in der nachfolgenden Beschreibung näher erläutert. Es zeigen:
- Fig. 1: schematisch in Seitenansicht ein erstes Ausführungsbeispiel des erfindungsgemäßen Scheinwerfers mit integrierter Mikrowellenantenne mit rotationssymmetrischem Reflektor und Subreflektor;
- Fig. 2: schematisch in Seitenansicht ein zweites Ausführungsbeispiel des erfindungsgemäßen Scheinwerfers mit integrierter Mikrowellenantenne mit rotationssymmetrischem Reflektor und direkter seitlicher Einstrahlung der Mikrowellen;
- Fig. 3: schematisch in Seitenansicht ein drittes Ausführungsbeispiel des erfindungsgemäßen Scheinwerfers mit integrierter Mikrowellenantenne mit rotationssymmetrischem Reflektor, Subreflektor und Korrekturlinsen;
- Fig. 4: schematisch in Seitenansicht ein viertes Ausführungsbeispiel des erfindungsgemäßen Scheinwerfers mit integrierter Mikrowellenantenne mit rotationssymmetrischem Reflektor, Streuscheibe und direktes Licht abschirmendem Speiseelement;
- Fig. 5: schematisch in Seitenansicht ein fünftes Ausführungsbeispiel des erfindungsgemäßen Scheinwerfers mit integrierter Mikrowellenantenne mit nicht rotationssymmetrischem Reflektor und seitlicher Einstrahlung der Mikrowellen mittels filternden Subreflektoren;
- Fig. 6: schematisch in Seitenansicht ein sechstes Ausführungsbeispiel des erfindungsgemäßen Scheinwerfers mit integrierter Mikrowellenantenne mit rotationssymmetrischem Reflektor und zentral angeordnetem Speisestrahler mit Hilfsreflektor;
- Fig. 7: schematisch in Seitenansicht ein siebtes Ausführungsbeispiel des erfindungsgemäßen Scheinwerfers mit integrierter Mikrowellenantenne mit Offset-Reflektor und auf einem Trägersubstrat aufgebrachten Elementen, die direkt in den Reflektor einstrahlen, und
- Fig. 8: schematisch in Seitenansicht ein achtes Ausführungsbeispiel des erfindungsgemäßen Scheinwerfers mit integrierter Mikrowellenantenne mit Offset-Reflektor und auf einem Trägersubstrat aufgebrachten Elementen, die indirekt in den Reflektor über einen geformten Hilfsreflektor einstrahlen.

### Beschreibung der Ausführungsbeispiele

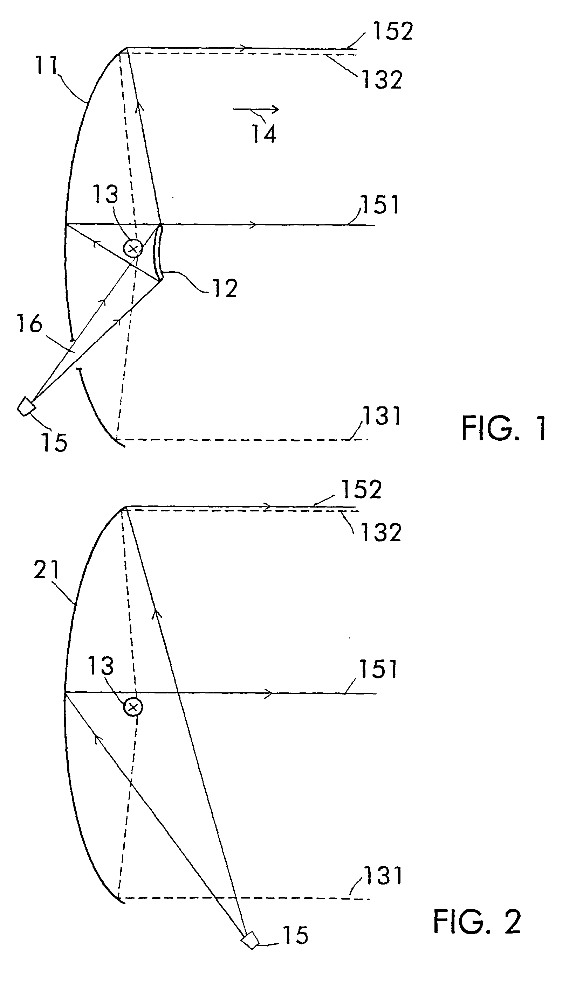

In Fig. 1 ist schematisch in Seitenansicht ein erstes Ausführungsbeispiel des erfindungsgemäßen Scheinwerfers mit integrierter Mikrowellenantenne mit einem rotationssymmetrischem paraboloidartigem Reflektor 11 und einem geeignet geformten Subreflektor 12 dargestellt. Zwischen Reflektor 11 und Subreflektor 12 ist eine Lichtquelle 13 angeordnet. Der Subreflektor 12 ist dabei so angebracht, daß er die direkte Lichtabstrahlung der Lichtquelle 13 in Abstrahlrichtung 14 abschirmt. Die Strahlung eines Speiseelements 15 des Mikrowellensystems wird durch eine geeignet, beispielsweise mittig oder außermittig, positionierte Öffnung 16 im Reflektor 11 von hinten auf den Subreflektor 12 gelenkt. Dieser ist zusammen mit dem Speiseelement 15 und der Öffnung 16 im dargestellten Ausführungsbeispiel so angeordnet, daß die Mikrowellenstrahlung über die obere Hälfte des Reflektors 11 gebündelt und abgestrahlt wird. Es ist klar, daß die vom Zielobjekt reflektierten Radarstrahlen auf dem umgekehrten Weg zu einem am Ort des Speiseelements 16 wirksamen Empfangselement, z.B. dem Speiseelement selbst, gelangen. Das Speiseelement kann mittels einer Richtungsweiche, die ein Zirkulator oder Doppelrichtkoppler sein kann, gleichzeitig Empfangselement sein. Der Strahlengang für die Lichtquelle 13 ist durch die jeweiligen Randstrahlen 131 und 132 dargestellt. Der Strahlengang für das Speiseelement 16 des Mikrowellensystems ist durch die jeweiligen Randstrahlen 151 und 152 dargestellt.

Fig. 2 zeigt schematisch in Seitenansicht ein zweites Ausführungsbeispiel des erfindungsgemäßen Scheinwerfers mit integrierter Mikrowellenantenne mit einem rotationssymmetrischem, paraboloidartig gestalten Reflektor 21 und direkter seitlicher Einstrahlung der Mikrowellen. Dazu ist das Speiseelement 15 seitlich des Reflektors 21 und in Abstrahlrichtung 14 gesehen in geeignetem Abstand vor der Lichtquelle 13 angeordnet.

Auch bei diesem Ausführungsbeispiel ist die Anordnung des Speiseelements 15 der Mikrowellensystem so getroffen, daß der Radarstrahl durch die obere Hälfte des Reflektors 21 gerichtet und gebündelt wird. Der Strahlengang für die Lichtquelle 13 ist wiederum durch die jeweiligen Randstrahlen 131 und 132 dargestellt. Der Strahlengang für das Speiseelement 15 des Mikrowellensystems ist ebenfalls wiederum durch die jeweiligen Randstrahlen 151 und 152 dargestellt.

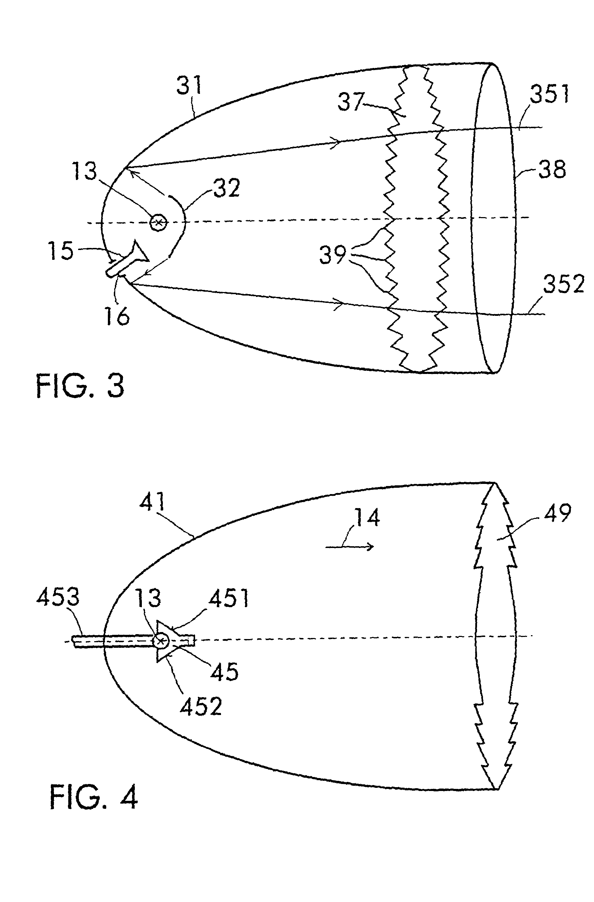

In einem weiteren Ausführungsbeispiel des erfindungsgemäßen Scheinwerfers mit integrierter Mikrowellenantenne, welches schematisch in Seitenansicht in Fig. 3 dargestellt ist, ist ein rotationssymmetrischer, paraboloidartiger Reflektor 31 mit einem Subreflektor 32 und Korrekturlinsen 37 und 38 vorgesehen. Diese Anordnung ist ähnlich der in Fig. 1 dargestellten. Jedoch ragt das Speiseelement 15 des Mikrowellensystems durch eine Öffnung 16 durch den Reflektor 31 mittig, oder wie dargestellt, außermittig an geeigneter Position in den Reflektorraum hinein. Die abgestrahlte Radarstrahlung trifft auf den in seiner Krümmung gegensinnig zum Reflektor 31 geformten Subreflektor 32, welcher weiterhin so positioniert ist, daß er die direkte Strahlung der Lichtquelle 13 gegenüber der Scheinwerferöffnung abschirmt.

Im Bereich dieser Scheinwerferöffnung sind die beiden Korrekturlinsen 37 und 38 angebracht. Dabei kann die eine Korrekturlinse 38 eine optische Korrekturlinse sein und die Korrekturlinse 37 eine dielektrische Korrekturlinse. Diese beiden Korrekturlinsen 37 und 38 berichtigen sowohl den optischen Strahlengang als auch den Strahlengang des Radarstrahls. Dessen Randstrahlen sind mit den Bezugszeichen 351 und 352 dargestellt. Die dielektrische Korrekturlinse 37 ist vorzugsweise aus einem Material mit hoher Dielektrizitätskonstanten von εᵣ ≈ 10 hergestellt, beispielsweise aus Al₂O₃-Keramik oder Kunststoff, der mit TiO₂ gefüllt ist. Zur Verbesserung des Reflexionskoeffizienten kann diese dielektrische Linse 37 weiterhin mit "Matching-Grooves" 39 versehen sein.

In Fig. 4 ist schematisch in Seitenansicht ein viertes Ausführungsbeispiel des erfindungsgemäßen Scheinwerfers mit integrierter Mikrowellenantenne dargestellt. Dabei wird ein rotationssymmetrischer, paraboloidartiger Reflektor 41 von einer Streuscheibe 49, die aus einer Fresnellinse gebildet sein kann, nach vorne hin in Abstrahlrichtung 14 abgeschlossen. Der Reflektor 41 könnte auch ein Ausschnitt aus einem Rotationsparaboloid sein. Ein Speiseelement 45 ist so gestaltet und angeordnet, daß es direktes Licht der Lichtquelle 13 in Abstrahlrichtung 14 abschirmt. Als Speiseelement 45 kann in vorteilhafter Weise ein Speisehorn oder Hornstrahler verwandt werden, der z.B. auf den mit 451 und 452 bezeichneten Flächen die Mikrowellenstrahlung abstrahlt. Es kann als Speiseelement 45 auch ein dielektrischer Speisestrahler verwendet werden. Das Speiseelement 45 wird über einen beispielsweise zentral angebrachten Hohlleiter 453 mit Energie versorgt.

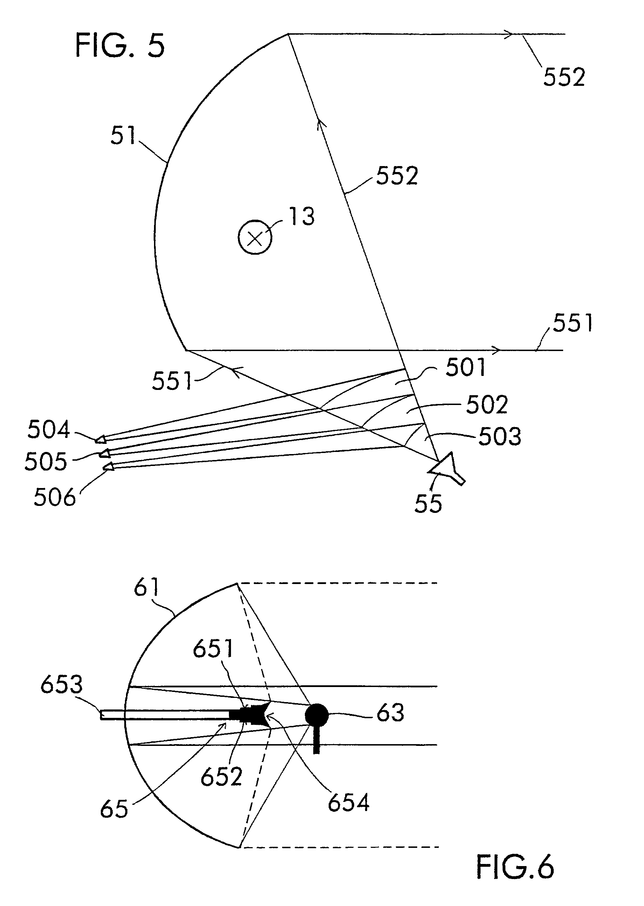

Ein fünftes Ausführungsbeispiel des erfindungsgemäßen Scheinwerfers mit integrierter Mikrowellenantenne ist schematisch in Seitenansicht in Fig. 5 dargestellt. In einen nicht rotationssymmetrischen, paraboloidartiger Reflektor 51 erfolgt die Einstrahlung der Mikrowellen von einem Speiseelement 55 von der Seite her. Mittels filternder Subreflektoren 501, 502, 503, die im Radarstrahlengang, dargestellt durch Randstrahlen 551 und 552, angeordnet sind, werden aus dem reflektierten Radarstrahl beispielsweise drei verschiedene Frequenzen herausgefiltert und seitlich auf drei zugeordnete Empfangselemente 504, 505 und 506 abgelenkt. Die filternden Subreflektoren 501, 502 und 503 können in einfacher Weise durch frequenzselektive Strukturen auf ihren Oberflächen realisiert werden und somit mit der gewünschten Filtercharakteristik ausgestattet werden. Diese Anordnung eignet sich als mehrstrahliges System, wobei die Subreflektoren 501, 502 und 503 so gedreht werden können, daß mehrere Strahlrichtungen der Hauptkeule entstehen. Dies ist dann ein Winkel auflösendes Radar.

In Fig. 6 ist schematisch in Seitenansicht ein sechstes Ausführungsbeispiel des erfindungsgemäßen Scheinwerfers mit integrierter Mikrowellenantenne mit einem rotationssymmetrischem, paraboloidartigem oder geformten Reflektor 61 und zentral angeordnetem Speisestrahler 65 dargestellt. Dem Speisestrahler 65 wird die abzustrahlende Energie über eine Rundhohlleiter 653 zugeführt. Der Speisestrahler 65 ist ein dielektrischer Strahler und besitzt dem Reflektor 61 zugewandte schräge, besonders strukturierte Flächen 651 und 652, über die die Mikrowellen auf den Reflektor 61 hin abgestrahlt werden.

Bevorzugt im Brennpunkt des Reflektors 61 ist eine Gasentladungslampe 63 oder auch eine Halogenlampe, sogenannte H4-Lampe, als Lichtquelle angeordnet. Der zwischen Reflektor 61 und Lichtquelle 63 zentral angeordnete dielektrische Strahler 65 weist auf der der Lichtquelle 63 zugewandten Seite eine geformte Fläche 654 auf, die einen geformten Hilfsreflektor bildet, welcher innerhalb des dielektrischen Strahlers 65 metallisiert ist und außerhalb, der Lichtquelle 63 zugewandt, verspiegelt sein kann, um die Abschattung zu vermindern.

Bei diesem Ausführungsbeispiel gemäß Fig. 6 besteht das die Mikrowellen abstrahlende elektrische System aus dem dielektrischen Rückwärtsstrahler 65 mit einer dem Cassegrain-Prinzip ähnlichen Geometrie. Die aus dem Rundhohlleiter 653 austretende elektromagnetische Welle wird innerhalb des dielektrischen Strahlerteils geführt, an dem durch Metallisierung an der Fläche 654 des Dielektrikums gebildeten Hilfsreflektor reflektiert und in Richtung des Reflektors 61 abgestrahlt. Ein weiterer Freiheitsgrad für die Dimensionierung des elektrischen Systems ist durch die Gestaltungsform der äußeren Oberfläche des Dielektrikums, die als Flächen 651, 652 in der Seitenansicht gemäß Fig. 6 dargestellt ist, gegeben. Damit kann selbst bei einer parabolischen Kontur des optischen Systems das elektrische System unabhängig davon dimensioniert werden. Die Abmessungen des Hilfsreflektors 654 können durch die Wahl der Dielektrizitätskonstanten klein gehalten werden. Dadurch ist die Anordnung der Lichtquelle 63 vor diesem, außen vorzugsweise verspiegelten, Hilfsreflektor 654 im Brennpunkt des Reflektors 61 auf vorteilhafte Weise ermöglicht.

Bei rotationssymmetrischen Anordnungen bestehen prinzipiell vorhandene Abschattungsprobleme. Diese betreffen gleichermaßen das optische wie das elektrische System. Andererseits ist die äußerst kompakte Bauweise von besonderem Vorteil. Die in den weiteren dargestellten Ausführungsbeispielen mit Offset-Reflektor geformten Scheinwerfer bieten hier vorteilhafte Alternativen.

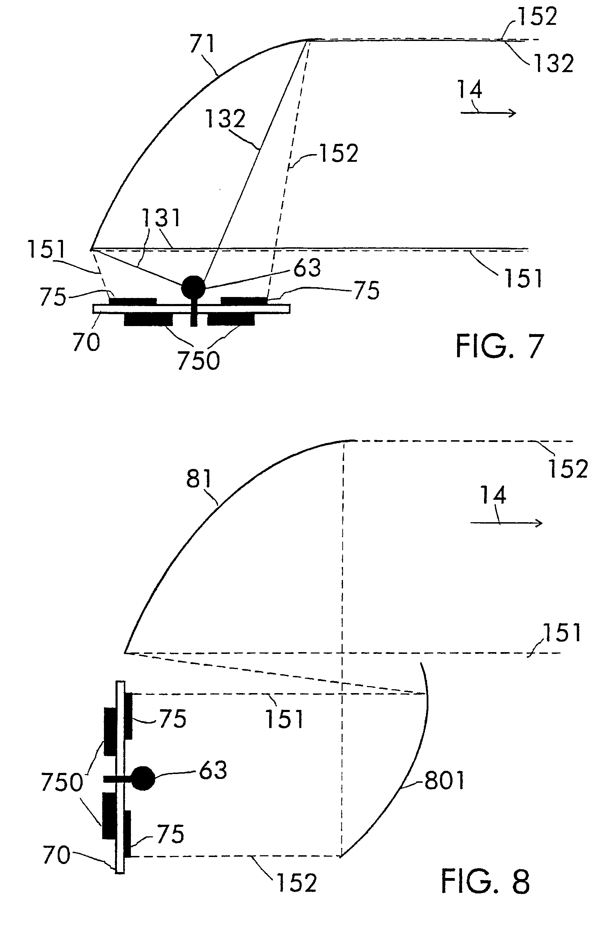

Eine Einreflektor-Offset-Anordnung ist anhand des in Fig. 7 schematisch in Seitenansicht dargestellten siebten Ausführungsbeispiel des erfindungsgemäßen Scheinwerfers mit integrierter Mikrowellenantenne gezeigt. Ein Reflektor 71 besteht aus einem Ausschnitt eines Rotationsparaboloiden. Auf einem Trägersubstrat 70 sind die strahlenden Elemente aufgebracht, die direkt in den Reflektor 71 einstrahlen. Dabei ist das Trägersubstrat 70 mit seiner Ebene parallel zur Abstrahlrichtung 14 des Scheinwerfers angeordnet. Das elektrische Speiseelement des Mikrowellensystems ist als ein planares Array aus einem oder mehreren planaren Strahlerelementen 75, sog. patches, gebildet. Dieses Speiseelement ist auf der Oberseite des Trägersubstrats 70 aufgebracht.

Die Auslegung des Primärstrahlers kann so gestaltet werden, daß entweder eine Formung des Primärdiagramms durch entsprechende Anregung der Patches über ein Verteilnetzwerk durchgeführt wird, oder daß die Patches durch entsprechende Netzwerke derart in der Phase angesteuert werden, daß eine Schwenkung des Mikrowellenstrahls durchgeführt werden kann. Darüber hinaus können die einzelnen Strahlerelemente 75 auch separat zu entsprechenden Sende-/Empfangseinheiten 750 geführt werden. Auf diese Weise läßt sich ein System mit mehreren Strahlungskeulen realisieren.

Zur Verbesserung der elektrischen und optischen Eigenschaften kann die Oberfläche des Reflektors 71 besonders geformt werden. Es können dann damit beispielsweise konturierte Strahlungsdiagramme bzw. Strahlungsdiagramme mit niedrigen Nebenkeulen erzeugt werde. Der Primärstrahler kann als doppelseitiges Substrat ausgebildet werden, wie dargestellt. Dadurch ist eine Integration der Mikrowellenschaltung auf der Unterseite des Trägersubstrats 70 möglich, so daß eine sehr kompakte Bauweise zu erzielen ist. Das Array der planaren Strahlerelemente 75 ist so gestaltet, daß mittig eine Öffnung bzw. Aussparung zur Anbringung der Lichtquelle 63, vorzugsweise wiederum eine Gasentladungslampe, insbesondere eine Hochdruck-Gasentladungslampe, vorhanden ist. Die begrenzenden Randstrahlen des Strahlengangs des optischen Systems sind in Fig. 7 mit 131 und 132 bezeichnet und die begrenzenden Randstrahlen des elektrischen Mikrowellensystems sind in Fig. 7 mit 151 und 152 bezeichnet.

Bei diesem dargestellten Ausführungsbeispiel des erfindungsgemäßen Scheinwerfers mit integrierter Mikrowellenantenne ist sowohl das optische als auch das elektrische System frei von störenden Abschattungen.

Die in Fig. 7 dargestellte Einfachreflektoranordnung läßt sich mit Hilfe eines weiteren Hilfsreflektors zu einem Doppelreflektorsystem erweitern. Ein solches achtes Ausführungsbeispiel ist schematisch in Seitenansicht des erfindungsgemäßen Scheinwerfers mit integrierter Mikrowellenantenne in Fig. 8 dargestellt. Die dargestellte Doppelreflektoranordnung ist mit einem besonders geformten Offset-Reflektor 81 und einem ebenfalls geformten Hilfsreflektor 801 nach dem Gregory-System gestaltet. Dies bedeutet, daß der Hilfsreflektor 801 ein Ausschnitt aus einem Rotationsellipsoiden ist. Die Doppelreflektoranordnung könnte auch nach dem Cassegrain-System aufgebaut sein, wozu dann der Hilfsreflektor als Ausschnitt eines Rotationshyperboloiden gestaltet ist. Möglich ist es auch, was jeweils von der vorgesehenen Anwendung abhängig ist, eine beliebig geformte Oberfläche für den Hilfsreflektor und/oder den Reflektor vorzusehen.

Das Trägersubstrat 70 mit seinen darauf aufgebrachten Elementen, den planaren Strahlerelementen 75 auf der einen Seite und den Sende- und Empfangseinheiten 750 auf der anderen Seite, sowie der integrierten Lichtquelle 63, ist bei dieser Anordnung so plaziert, daß seine Ebene senkrecht zur Abstrahlrichtung 14 des Scheinwerfers steht. Die elektrische und optische Abstrahlung erfolgt indirekt in den Reflektor 81 hinein über den besonders geformten Hilfsreflektor 801. Die Randstrahlen des elektrischen Mikrowellensystems sind mit 151 und 152 in der Fig. 8 dargestellt.

Bei der praktischen Realisierung eines gemäß diesem achten Ausführungsbeispiel gestalteten Scheinwerfers werden beide Reflektoren 81 und 801 zweckmäßig in einem gemeinsamen Gehäuse untergebracht. Es ist klar, daß die Platzverhältnisse hierbei andere sind als bei dem siebten Ausführungsbeispiel gemäß Fig. 7.

Bei den vorstehend dargestellten Ausführungsbeispielen können als Lichtquelle verschiedene Lampen eingesetzt werden. So ist es vorteilhaft, Halogenlampen, insbesondere die H4-Lampen zu verwenden. Entsprechend neuerer Entwicklung in der Kraftfahrzeug-Scheinwerfertechnik können auch und in zunehmenden Maße Gasentladungslampen, insbesondere Hochdruck-Gasentladungslampen, mit ihrer wesentlich höheren Lichtausbeute bei drastisch verringertem Energiebedarf vorteilhaft Verwendung finden. Bei Parabolscheinwerfern werden derzeit üblicherweise die genannten H4-Lampen eingesetzt, wogegen für Reflexionsscheinwerfer mit Linsen üblicherweise die Gasentladungslampen verwendet werden.

Das mit dem optischen System kombinierte bzw. in es integrierte Mikrowellensystem soll insbesondere als Kraftfahrzeugradarsystem Anwendung finden. Dies insbesondere als Abstandsradar oder zur den Fahrzeugführer unterstützenden Steuerungshilfe. Dabei ist ein Auflösungsvermögen zur Feststellung von Hindernissen im Bereich von Metern bis hinunter zu Zentimetern gefragt. Das dazu nötige Mikrowellensystem muß in seinem Auflösungsvermögen dementsprechend um etwa eine Zehnerpotenz besser sein. In vorteilhafter Weise wird daher das bei der Erfindung verwendete Mikrowellensystem im Bereich von ca. 10 - 100 GHz, was einer Wellenlänge von etwa 3 cm - 3 mm entspricht, betrieben. Ein besonders bevorzugter Frequenzbereich liegt zwischen ca. 76 - 77 GHz, was einer Wellenlänge von etwa 4 mm entspricht. Mit einer derartigen Wellenlänge lassen sich auch genügend kleine Speiseelemente für die Kombination mit dem optischen System innerhalb eines Scheinwerfers realisieren.

Die Erfindung bietet durch die funktionelle und räumliche Trennung von optischem und elektrischem System in vorteilhafter Weise die Möglichkeit, jedes System zunächst für einen bestimmten Scheinwerfer und Anwendungszweck je für sich getrennt zu optimieren und dann, platzsparend eingebaut in einen einzigen Scheinwerfer oder in eine Kraftfahrzeugleuchte, über den gemeinsamen Reflektor zusammen zu justieren.

## Patentansprüche

1. Scheinwerfer, insbesondere Kraftfahrzeugscheinwerfer, mit integrierter Mikrowellenantenne, mit einem Reflektor (11, 21, 31, 41, 51, 61, 71, 81), der sowohl für die Bündelung des Scheinwerferlichtes als auch für die Bündelung der Mikrowellenstrahlen verwendet ist,
dadurch gekennzeichnet, daß
das optische System mit seiner Lichtquelle (13, 63) und das Mikrowellensystem mit seinem Speiseelement (15, 45, 55, 65, 75) und/oder Empfangselement funktionell und räumlich vollständig unabhängig voneinander gestaltet und getrennt angeordnet sind.

2. Scheinwerfer mit integrierter Mikrowellenantenne nach Anspruch 1, dadurch gekennzeichnet, daß der Reflektor (11, 21, 31, 41, 51, 61) paraboloidartig ausgebildet ist.

3. Scheinwerfer mit integrierter Mikrowellenantenne nach Anspruch 1 oder 2, dadurch gekennzeichnet, daß der Reflektor (31, 41) mit einer Streuscheibe (38, 49) und/oder einer dielektischen Linse (37) versehen ist.

4. Scheinwerfer mit integrierter Mikrowellenantenne nach Anspruch 2 oder 3, dadurch gekennzeichnet, daß der Reflektor (11, 21, 31, 41, 51, 61, 71, 81) rotationssymmetrisch (11, 21, 31, 41, 61) oder als Offset-Reflektor (51, 71, 81) gestaltet ist.

5. Scheinwerfer mit integrierter Mikrowellenantenne nach einem der Ansprüche 1 bis 4, dadurch gekennzeichnet, daß als Speiseelement (15, 45, 55, 65) ein Speisehorn (45, 65) oder ein dielektrischer Speisestrahler (75) oder ein Mikrostreifenleiter-Patch bzw. -Patch-Array vorgesehen ist.

6. Scheinwerfer mit integrierter Mikrowellenantenne nach Anspruch 5, dadurch gekennzeichnet, daß die Einstrahlung der Mikrowellen mittels des Speiseelements (15, 45, 55, 65, 75) auf den Reflektor (11, 21, 31, 41, 51, 61, 71, 81) direkt oder indirekt, insbesondere über einen Sub- oder Hilfsreflektor (12, 32, 801), erfolgt.

7. Scheinwerfer mit integrierter Mikrowellenantenne nach einem der vorigen Ansprüche, dadurch gekennzeichnet, daß das Speiseelement (15, 45, 65) oder ein Subreflektor (12, 32) so angeordnet sind, daß das direkte Licht der Lichtquelle (13) dadurch abschirmbar ist.

8. Scheinwerfer mit integrierter Mikrowellenantenne nach Anspruch 1 oder einem der Ansprüche 2 bis 6, dadurch gekennzeichnet, daß Lichtquelle (63) und ein oder mehrere planar gestaltete Mikrowellen-Speiseelemente (75) und/oder Mikrowellen-Empfangselemente auf einem gemeinsamen ebenen Trägersubstrat (70) aufgebracht sind und daß das Trägersubstrat (70) außerhalb eines Offset-Reflektors (71, 91) angeordnet ist.

9. Scheinwerfer mit integrierter Mikrowellenantenne nach Anspruch 8, dadurch gekennzeichnet, daß die Anordnung des Trägersubstrats (70) und der darauf angeordneten Elemente (63, 75, 750) derart ist, daß die Einstrahlung von Licht und Mikrowellen direkt erfolgt (Fig. 7).

10. Scheinwerfer mit integrierter Mikrowellenantenne nach Anspruch 8, dadurch gekennzeichnet, daß die Anordnung des Trägersubstrats (70) und der darauf angeordneten Elemente (63, 75, 750) derart ist, daß die Einstrahlung von Licht und Mikrowellen indirekt erfolgt, wobei ein entsprechend geformter und angeordneter Hilfsreflektor (801) vorgesehen ist und der Offset-Reflektor (81) als besonders geformtes Teil ausgeführt ist.

11. Scheinwerfer mit integrierter Mikrowellenantenne nach Anspruch 10, dadurch gekennzeichnet, daß der Hilfsreflektor (801) und/oder der Offset-Reflektor (71, 81) ein Ausschnitt aus einem Rotationsellipsoiden oder aus einem Rotationshyperboloiden ist.

12. Scheinwerfer mit integrierter Mikrowellenantenne nach einem der vorigen Ansprüche, dadurch gekennzeichnet, daß als Lichtquelle (13, 63) eine Halogenlampe (13), insbesondere eine H4-Lampe, oder eine Gasentladungslampe, insbesondere eine Hochdruck-Gasentladungslampe (63), vorgesehen ist.

13. Scheinwerfer mit integrierter Mikrowellenantenne nach einem der vorigen Ansprüche, dadurch gekennzeichnet, daß das Mikrowellensystem im Bereich von ca. 10 - 100 GHz, vorzugsweise im Bereich von ca. 76 - 77 GHz, betrieben wird.

## Claims

1. Headlamp, in particular a motor vehicle headlamp, with an integrated microwave antenna, having a reflector (11, 21, 31, 41, 51, 61, 71, 81) which is used both for focusing the headlamp light and for focusing the microwave beams, characterized in that the optical system with its light source (13, 63), and the microwave system with its supply element (15, 45, 55, 65, 75) and/or receiving element are fashioned completely independently functionally and spatially and are arranged separately.

2. Headlamp with an integrated microwave antenna according to Claim 1, characterized in that the reflector (11, 21, 31, 41, 51, 61) is designed in the manner of a paraboloid.

3. Headlamp with an integrated microwave antenna according to Claim 1 or 2, characterized in that the reflector (31, 41) is provided with a diffuser (38, 49) and/or a dielectric lens (37).

4. Headlamp with an integrated microwave antenna according to Claim 2 or 3, characterized in that the reflector (11, 21, 31, 41, 51, 61, 71, 81) is fashioned with rotational symmetry (11, 21, 31, 41, 61) or as an offset reflector (51, 71, 81).

5. Headlamp with an integrated microwave antenna according to one of Claims 1 to 4, characterized in that use is made as supply element (15, 45, 55, 65) of a supply horn (45, 645) or a dielectric supply emitter (75) or a microstripline patch or microstripline patch array.

6. Headlamp with an integrated microwave antenna according to Claim 5, characterized in that the microwaves are irradiated onto the reflector (11, 21, 31, 41, 51, 61, 71, 81) directly or indirectly, in particular via a sub- or auxiliary reflector (12, 32, 801) by means of the supply element (15, 45, 55, 65, 75).

7. Headlamp with an integrated microwave antenna according to one of the preceding claims, characterized in that the supply element (15, 45, 65) or a subreflector (12, 32) is arranged such that the direct light from the light source (13) can be blocked off by it.

8. Headlamp with an integrated microwave antenna according to Claim 1 or one of Claims 2 to 6, characterized in that the light source (63) and one or more microwave supply elements (75) of planar shape and/or microwave receiving elements are fitted on a common flat carrier substrate (70) and in that the carrier substrate (70) is arranged outside an offset reflector (71, 91).

9. Headlamp with an integrated microwave antenna according to Claim 8, characterized in that the arrangement of the carrier substrate (70) and the elements (63, 75, 750) arranged thereon is such that the light and microwaves are irradiated directly (Figure 7).

10. Headlamp with an integrated microwave antenna according to Claim 8, characterized in that the arrangement of the carrier substrate (70) and the elements (63, 75, 750) arranged thereon is such that the light and microwaves are irradiated indirectly, an appropriately shaped and arranged auxiliary reflector (801) being provided, and the offset reflector (81) being designed as a specially shaped part.

11. Headlamp with an integrated microwave antenna according to Claim 10, characterized in that the auxiliary reflector (801) and/or the offset reflector (71, 81) is a section from an ellipsoid of revolution or from a hyperboloid of revolution.

12. Headlamp with an integrated microwave antenna according to one of the preceding claims, characterized in that a halogen lamp (13), in particular an H4 lamp, or a gas discharge lamp, in particular a high-pressure gas discharge lamp (63) is provided as light source (13, 63).

13. Headlamp with an integrated microwave antenna according to one of the preceding claims, characterized in that the microwave system is operated in the region of approximately 10 - 100 GHz, preferably in the region of approximately 76 - 77 GHz.

## Revendications

1. Projecteur, notamment projecteur de véhicule automobile, comportant une antenne hyperfréquence intégrée, un réflecteur (11, 21, 31, 41, 51, 61, 71, 81) utilisé à la fois pour regrouper la lumière du projecteur et les faisceaux micro-ondes,
caractérisé en ce que
le système optique et sa source lumineuse (13, 63) ainsi que le système à micro-ondes avec son élément d'alimentation (15, 45, 55, 65, 75) et/ou l'élément de réception, sont fonctionnellement et géométriquement totalement indépendants dans leur conception, et sont installés séparément.

2. Projecteur à antenne hyperfréquence intégrée selon la revendication 1,
caractérisé en ce que
le réflecteur (11, 21, 31, 41, 51, 61) est en forme de paraboloïde,

3. Projecteur à antenne hyperfréquence intégrée selon l'une quelconque des revendications 1 ou 2,
caractérisé en ce que
le réflecteur (31, 41) est muni d'une lentille de diffraction (38, 49) et/ou d'une lentille diélectrique (37).

4. Projecteur à antenne hyperfréquence intégrée selon l'une quelconque des revendications 2 ou 3,
caractérisé en ce que
le réflecteur (11, 21, 31, 41, 51, 61, 71, 81) a un réflecteur symétrique en rotation (11, 21, 31, 41, 61) ou un réflecteur à décalage (51, 71, 81).

5. Projecteur à antenne hyperfréquence intégrée selon l'une quelconque des revendications 1 à 4,
caractérisé en ce que
l'élément d'alimentation (15, 45, 55, 65) est un cornet (45, 65) ou un dispositif d'alimentation par rayonnement diélectrique (75) ou une étiquette à micro-bande conductrice ou un réseau sur étiquette.

6. Projecteur à antenne hyperfréquence intégrée selon la revendication 5,
caractérisé en ce que
l'injection des micro-ondes par l'élément d'alimentation (15, 45, 55, 65, 75) sur le réflecteur (11, 21, 31, 41, 51, 61, 71, 81) se fait de manière directe ou indirecte, notamment par l'intermédiaire d'un réflecteur auxiliaire ou sous-réflecteur (12, 32, 801).

7. Projecteur à antenne hyperfréquence intégrée selon l'une quelconque des revendications précédentes,
caractérisé en ce que
l'élément d'alimentation (15, 45, 65) ou un sous-réflecteur (12, 32) sont disposés pour que la lumière directe de la source lumineuse (13) soit coupée par cet élément.

8. Projecteur à antenne hyperfréquence intégrée selon la revendication 1 ou l'une quelconque des revendications 2 à 6,
caractérisé en ce que
la source lumineuse (63) et un ou plusieurs éléments d'alimentation hyperfréquence (75) de forme plane et/ou éléments de réception hyperfréquence, sont prévus sur un même substrat de support plan commun (70), et le substrat de support (70) se trouve en dehors d'un réflecteur à décalage (71, 91).

9. Projecteur à antenne hyperfréquence intégrée selon la revendication 8,
caractérisé en ce que
la disposition du substrat de support (70) et des éléments (63, 75, 750) qu'il porte est telle que le rayonnement incident de la lumière et des hyperfréquences se fasse directement (figure 7).

10. Projecteur à antenne hyperfréquence intégrée selon la revendication 8,
caractérisé en ce que
la disposition du substrat de support (70) et des éléments (63, 75, 750) qu'il porte, est telle que le rayonnement incident de la lumière et des hyperfréquences se fasse de manière indirecte, un réflecteur auxiliaire (801) de forme et de disposition appropriées étant prévu et le réflecteur à décalage (81) étant une pièce de forme particulière.

11. Projecteur à antenne hyperfréquence intégrée selon la revendication 10,
caractérisé en ce que
le réflecteur auxiliaire (801) et/ou le réflecteur à décalage (71, 81) correspond à un segment d'ellipsoïde de rotation ou d'hyperboloïde de rotation.

12. Projecteur à antenne hyperfréquence intégrée selon l'une quelconque des revendications précédentes,
caractérisé en ce que
la source lumineuse (13, 63) est une lampe halogène (13), notamment une lampe H4 ou une lampe à décharge de gaz, notamment une lampe à décharge de gaz à haute pression (63).

13. Projecteur à antenne hyperfréquence intégrée selon l'une quelconque des revendications précédentes,
caractérisé en ce que
le système à micro-ondes fonctionne dans une plage d'environ 10-100 GHz et de préférence dans une plage d'environ 76-77 GHz.
